# EUROPEAN PATENT APPLICATION

(11) **EP 4 603 319 A1**
(43) Date of publication of application: **20.08.2025**
(21) Application number: 24382146.9
(22) Date of filing: 15.02.2024
(51) Int. Cl.: B60L 3/00, B60L 50/64, B60L 58/26, B60L 58/27, H01M 10/0525, H01M 10/613, H01M 10/625, H01M 10/653, H01M 10/6551, H01M 10/6554, H01M 10/6555, H01M 10/6556, H01M 10/6557, F28D 1/03, F28D 1/053, F28F 1/02, F28F 3/12, F28F 21/06, H01M 10/617, H01M 50/249, H01M 10/643, F28D 21/00

(54) **HANDLING SUPPORT FOR THERMAL CONDUCTION PLATES OF BATTERY CELLS**

(71) Applicant: BORGWARNER EMISSIONS SYSTEMS SPAIN, S.L.U., 36315 Vigo Pontevedra (ES)
(72) Inventor: PIÑEIRO LOSADA, Simón, 36380 Gondomar, Pontevedra (ES); CARRASCO HUERTAS, José María, 36205 Vigo, Pontevedra (ES); GEA CASALDERREY, Andrea, 36209 Vigo, Pontevedra (ES)
(74) Representative: ABG Intellectual Property Law, S.L.

(57) **Abstract**

The present invention relates to a handling support (2) suitable for handling thermal conduction plates (1) of battery cells. The thermal conduction plates (1) are plates adapted to transfer heat, either for cooling or heating, to or from electric energy storage cells in batteries. The installation of these plates (1) requires precise handling for the final positioning thereof inside the battery and the handling may furthermore consist of the handling of a large number of plates (1) either one by one or in groups of plates (1). The preferably automated handling requires handling means (2) that allow picking up and suitably positioning each of the thermal conduction plates (1). According to the invention, these means (2) are formed by a support part (2) which is coupled to the thermal conduction plate (1).

## Description

### OBJECT OF THE INVENTION

The present invention relates to a handling support suitable for manipulating thermal conduction plates of battery cells.

The thermal conduction plates are plates adapted to transfer heat, either for cooling or heating, to or from electric energy storage cells in batteries.

The installation of these plates requires precise handling for the final positioning thereof inside the battery and the handling may furthermore consist of the handling of a large number of plates either one by one or in groups of plates.

The preferably automated handling requires handling tooling that allow picking up and suitably positioning each of the thermal conduction plates. According to the invention, these means are formed by a support part which is coupled to the thermal conduction plate. The support is characterized by a configuration that allows quick fixing with the plate and ensures the absence of clearances to allow manipulating the conduction plate through the handling support.

The support is coupled to an end of the plate where the end is particularly adapted for the coupling.

### BACKGROUND OF THE INVENTION

One of the most intensively developed fields of technology in the automotive sector is the implementation of electric engines, either in hybrid systems or in vehicles driven solely by electric engines. In both cases, electrical energy storage is a challenge that requires increasingly higher energy density per unit volume.

The requirements for high energy densities per unit volume and various battery types mean that heat that must be evacuated is produced both during charging and discharging. Likewise, when the external temperature drops below certain threshold values, it is necessary to ensure a minimum temperature to prevent battery degradation.

The most common internal structure of batteries includes a plurality of individual cells connected to one another, the cells preferably having a cylindrical configuration. These cells require heat conductive structures that allow the transfer of said heat from the cell to the outside or from the outside to the cell to maintain temperature control inside the battery. Furthermore, these conducting structures, once installed in the battery in physical contact with the cells, may perform a supporting function or at least facilitate the stability of the assembly inside the battery.

In any case, one of the most common thermal conduction plate configurations is in the shape of an elongated plate, for example, with a corrugated configuration to adapt to cylindrical cell packing, and which must be installed in a precise position during battery construction or manufacture. A battery may have a large number of plates and one of the problems found in manufacturing is the handing of these thermal conduction plates, particularly when the handling is automated. A specific example of automated handling is when the manipulator is a robot.

The handling of the plates must allow a plurality of plates to be quickly manipulated and transported and accurately positioned in the battery.

The present invention relates to a handling support suitable to be attached to an end of a thermal conduction plate of battery cells, allowing the handling of the plate through the support, overcoming the described problems given that it provides handling means that do not have a thermal conduction plate.

### DESCRIPTION OF THE INVENTION

A first aspect of the invention relates to a handling support suitable for manipulating thermal conduction plates according to claims 1 to 8. A second aspect of the invention relates to the combination of a handling support and a thermal conduction plate, both adapted to be coupled to one another, forming a temperature control device for battery cells with means for handling and readily installing same in a battery, that is, the result is a temperature control device for battery cells according to any of claims 9 to 13. A third aspect of the invention relates to a method of manufacturing a temperature control device for battery cells according to claim 14.

The first inventive aspect relates to a handling support suitable for thermal conduction plates and more preferably adapted to at least retain a thermal conduction plate, said support comprising:
- *a housing configured to receive an end of a thermal conduction plate, the thermal conduction plate extending according to a longitudinal direction, the end of the thermal conduction plate having a sheet-like plate segment;*
- *handling means configured to be handled preferably by automated means; wherein the housing comprises retention means adapted to establish of least one retention according to the longitudinal direction (X-X') on the sheet-like plate segment.*

The thermal conduction plates have an elongated plate configuration, preferably in the shape of a wide band which can be flat or preferably corrugated. The direction in which the thermal conduction plate extends shall be known throughout the description as longitudinal direction. Additionally, the end of the conduction plate is finished in a sheet-like segment, with sheet also being understood as a plate-type structure, but with a thickness that is smaller than the thickness of the main plate.

The thermal conduction plate is handled through one of its ends which is the one that is mechanically linked to the handling support. For this purpose, the handling support comprises a housing which is configured to receive an end of the thermal conduction plate. A preferred way of receiving the end of the conduction plate is by insertion where, after insertion, retention means intervene preventing the handling support and the thermal conduction plate from separating. According to a preferred example, the retention means establish an attachment between the handling support and the thermal conduction plate such that there is no relative movement between both elements, at least in the longitudinal direction.

The retention means link the handling support and the sheet-like plate segment. According to preferred embodiments, the sheet-like plate uses a configuration that facilitates insertion into the housing. Specific retention means will be described below according to different embodiments.

According to an embodiment applicable to the described examples, *the housing comprises at least one elastically deformable tab configured to be deformed through the insertion of the end of the thermal conduction plate and to exert a force according to the longitudinal direction on said end of the thermal conduction plate.*

The presence of this elastically deformable tab means that the insertion of the end of the thermal conduction plate into the housing of the handling support causes the elastic deformation thereof and maintains a recovery force that tends to cause said end of the thermal conduction plate to come out of the housing. Given that after the insertion of the end of the thermal conduction plate the retention means prevent it from coming out, the combined action of the elastically deformable tab and the retention means give rise to a linkage without clearances, at least in the longitudinal direction. According to embodiments that will be described below with the help of the figures, there is an even number of elastically deformable tabs which are distributed on both sides according to the longitudinal direction and supported either directly on the sheet-like plate segment of the thermal conduction plate or in another place such as, for example, in a transition between the main body of the thermal conduction plate and the sheet-like plate segment.

According to an embodiment applicable to the examples described above, *the housing comprises one or more fitting ribs to exert a localized support stress on at least one point of the lateral surface in a region of the end of the thermal conduction plate.*

The mechanical linkage between the handling support and the thermal conduction plate, according to this embodiment, is not only with the retention means, but fitting ribs are further incorporated. These fitting ribs allow the insertion of the thermal conduction plate into the housing of the handling support, although they establish a localized support stress on at least one point of the lateral surface in a region of the end of the thermal conduction plate.

The lateral support ensures that, after insertion, there is no clearance that will give rise to relative movement in the transverse direction, that is, in a transverse direction with respect to the longitudinal direction and which is in turn parallel to the main plane of the thermal conduction plate. When the thermal conduction plate is corrugated, the main plane is the midplane. That is, considering a section of the thermal conduction plate with respect to a plane perpendicular to the longitudinal direction, the ribs exert support at least on the smaller sides of said section.

According to another preferred example, additionally, other ribs exert support on the larger faces of the thermal conduction plate, that is, considering the section of the thermal conduction plate with respect to a plane perpendicular to the longitudinal direction, the ribs also exert support on the larger sides of said section.

According to an embodiment applicable to the examples described above, *the housing comprises at least one positioning wedge in the insertion of the end of the sheet-like plate segment.*

According to this embodiment, the housing which receives the end of the thermal conduction plate by means of insertion has dimensions in which there is a clearance before complete insertion, so insertion is simplified. However, during this insertion phase, the end of the sheet-like plate segment, which is the first to enter the housing, encounters the positioning wedge, establishing a transition between the inlet area with larger dimensions and the tighter final dimensions.

The wedge configuration means that the positioning of the end of the sheet-like plate segment takes place naturally due to the action of the positioning wedge. This configuration allows an easy insertion due to the greater dimensions of the inlet and, in the final position with the insertion already completed, the absence of or smaller clearances at least in the direction in which the centering wedge acts. The expression "or smaller clearances" is used since the wedge does not have to be ultimately responsible for the absence of clearance, rather it can rest in the presence of localized support ribs, for example, which have been described.

According to this embodiment, the positioning wedge also provides stiffness to the part given the larger thickness in its final portion which receives the final end of the tube.

According to an embodiment applicable to the examples described above, *the central area of the housing comprises at least one outer reinforcement rib to reduce the opening of the housing after the insertion of the end having a sheet-like plate segment.*

The housing of the handling support has a configuration such that it admits the end of the thermal conduction plate, so the shape thereof is at least similar to the shape of the end of the thermal conduction plate. Given that the configuration is in the shape of a plate, the housing has a preferably elongated opening, so the central area can more easily deform by bending under stresses perpendicular to the surface of the housing.

This is the case, only by way of example, of the presence of support ribs inside the housing to increase fitting with the end of the thermal conduction plate. The force that these ribs exert against the thermal conduction plate imposes deformation on the walls of the support close to the housing which tends to open the opening of the housing.

This central area, located between the ends of where the edges of the thermal conduction plate are housed, is the one which tends to show increased de formations under the same stresses. In this embodiment, there is incorporated an outer reinforcement rib which tends to reduce the opening of the housing and, as a result, maintain the contact stresses between the walls or ribs of the housing with the end of the thermal conduction plate.

According to an embodiment applicable to the examples described above, *the support is further configured for handling thermal conduction plates having a sheet-like plate segment which have at least one window, and wherein the retention means are a clipping element adapted to establish clipping in the window of the sheet-like plate segment.*

According to this embodiment, the retention between the thermal conduction plate and the handling support is performed through the sheet-like plate segment of the thermal conduction plate. This sheet-like plate segment has at least one window which gives rise to inner edges, which edges delimit the window. In turn, the handling support establishes a clipping element as retention means. This clipping element allows the insertion of the sheet-like plate segment when the end of the thermal conduction plate enters the housing and undergoes a certain degree of elastic deformation until the relative insertion movement reaches the position of the window. Upon reaching the window, the clipping element is no longer supported on the sheet-like plate segment and elastically recovers its original shape, being partially housed in the window such that, in this insertion, it establishes support at least on a segment of the edge of the window and therefore the retention action thereof.

According to a more specific example, the window is open, that is, the edge which delimits the window is not a closed curve but an open curve configuring an open groove that reaches the side edge of the sheet-like plate segment, for example. A specific example is a window which is not configured by means of die cutting a rectangular perforation in the sheet-like plate, but rather the die-cutting, cutting or machining further includes the addition of a narrow notch which reaches the free edge of the sheet-like plate, leaving the window open. This configuration still provides part of the inner edge of the window to ensure clipping.

According to an embodiment applicable to the preceding example of retention by clipping, *the clipping element has a retention surface according to the longitudinal direction configured to establish support on the inner edge of the window and wherein this retention surface is oblique to prevent clearances.*

According to this embodiment, the clipping element which is housed at least partially in the window establishes interaction with the edge of the window where it is supported to achieve retention by means of an oblique surface. This oblique surface establishes a wedging condition, such that a permanent stress is ensured in the longitudinal direction through the action of the clipping element. This clipping element exhibits elastic recovery which allows the entry thereof in the window after insertion. The movement that occurs when being housed in the window causes the oblique surface to exert the wedging action.

According to an embodiment applicable to all the described examples and giving rise to a retention alternative to clipping is such that *the fixing means are two windows in the housing, the two windows coinciding with one another and being positioned such that, in the operating mode after the insertion of the thermal conduction plate, the sheet-like plate segment of the end of the thermal conduction plate is located between the two windows to establish fixing by means of the deep-drawing of the sheet-like plate segment such that the deep-drawn portion of material is accessible through the windows of the handling support and the deep-drawn portion of material is at least partially housed in the other window.*

This embodiment establishes a retention between the thermal conduction plate and the handling support based on a deep-drawing action. The support comprises two windows coinciding in the sense that:
- before the insertion of the thermal conduction plate, the position of the windows is such that between them, there exists the possibility of passing through both of said windows, for example, following a path essentially perpendicular to the surfaces containing the windows, and
- after the insertion of the thermal conduction plate, the sheet-like plate segment of the end of the conduction plate is interposed between both windows, preventing passage through both said windows at least partially and preferably preventing passage completely.

Once the thermal conduction plate has been inserted and the sheet-like plate segment is housed at least partially between both windows, a plastic deformation action on the material of the sheet-like plate segment exerted through a window deforms a portion of said material so that it is at least partially housed in the other window.

This at least partial entry of a portion of material into one of the windows through plastic deformation means that a retention is established between the portion of material partially housed in a window and at least one segment of the edge of said window. The retention thus established prevents the end of the thermal conduction plate from coming out of the housing of the handling support.

According to a more preferred example, the plastic deformation is such that the plastically deformed portion of material establishes contact with the entire edge of the window of the handling support, so the existence of clearances between the thermal conduction plate and the handling support is prevented.

A second aspect of the invention relates to a temperature control device which combines a thermal conduction plate and at least one handling support, wherein
- *the thermal conduction plate extends according to a longitudinal direction and comprises a sheet-like plate segment of one end;*
- *the support is according to any of the embodiments described above;*

*wherein the housing of the support houses at least the sheet-like plate segment and*
*wherein an attachment is established between the sheet-like plate segment and the retention means of the housing of the support.*

In this second aspect of the invention, the combination provides a temperature control device for batteries comprising the thermal conduction plate and the support that allows handling thereof, for example, with an automated handling.

The attachment between both components is carried out through the retention means of the housing of the support which interact with the end of the thermal conduction plate to provide said retention at least in the longitudinal direction.

According to an embodiment of the control device, the thermal conduction plate comprises a flat tube, preferably with inner channels that extend longitudinally, stamped at the end thereof to give rise to the sheet-like plate segment.

It is common to use metallic profiles, for example made of extruded aluminum, comprising a plurality of channels therein. These profiles can be bent, for example, to give rise to a corrugated configuration. Extrusion manufacturing gives rise to low-cost parts with multiple applications.

According to this embodiment, an operation of stamping the end of a profile having these characteristics causes the reduction of thickness, giving rise to a sheet-like plate segment, i.e., the sheet-like plate segment which is used to establish retention with the handling support through the retention means.

The operation of stamping an extruded profile is an example where manufacturing allows specific parts with very quick and cost-effective manufacturing steps.

According to an embodiment applicable to the preceding control device, *the flat tube is formed by two tubular bodies extending longitudinally and arranged adjacent and mechanically attached to one another by an intermediate plate, and wherein the retention means are double retention means symmetrically configured with respect to the longitudinal direction.*

According to this embodiment, the thermal conduction plate is a flat tube formed by two bodies which are in turn also flat tubes extending parallel to one another. Both parallel flat bodies are spaced apart from one another and attached by an intermediate plate. According to a specific example, between the two flat tubes there is a plate extending between the facing edges of both flat bodies.

By applying the stamping operation on a tube such as the one of this example, the stamping operation mainly acts by reducing the thickness in the flat tubular bodies, since the intermediate plate is already preferably a sheet-like element.

An alternative example that can be used in all cases is a flat tube formed by a single tubular body extending longitudinally and wherein, preferably, the retention means are located in a centered manner.

According to an embodiment applicable to the preceding control device, *the housing comprises a notch configured to be fitted to the intermediate plate of the thermal conduction plate.*

The sheet-like plate segment is at the end of the thermal conduction plate, so during insertion into the housing, it is the first to enter and to be housed in the innermost portion. However, the rest of the thermal conduction plate follows this sheet-like plate segment. When the structure of this thermal conduction plate has two flat bodies connected by a preferably sheet-like intermediate plate, the thickness in the central area of the thermal conduction plate is smaller. In this embodiment, the notch allows the housing to conform to the thermal conduction plate in this area of smaller thickness.

According to another embodiment of the thermal control device applicable to any of the preceding examples of the control device, *the two flat bodies attached by an intermediate plate are solid bodies and not tubes and they constitute a robust configuration of the thermal conduction plate.*

According to an embodiment of the thermal control device applicable to the examples of the device described above:
- at least part of the thermal conduction plate comprises an alloy comprising aluminum and optionally additional elements; and/or
- part or all of the support is formed by a material comprising:
   ∘ a polymer matrix,
   ∘ optionally a flame-retardant additive, and
   ∘ optionally a reinforcement additive.

In a particular embodiment, the thermal conduction plate consists of an alloy comprising aluminum.

In a more particular embodiment, the alloy of the thermal conduction plate comprises aluminum and optionally additional elements; wherein aluminum is the ingredient with the highest percentage by weight with respect to the total weight of said alloy.

In a more particular embodiment, the alloy of the thermal conduction plate may further comprise one or more elements selected from iron, manganese, silicon, zinc, titanium, copper, phosphorus, sulfur, molybdenum, nickel, nitrogen, niobium, tungsten, aluminum, cobalt, zirconium, selenium, cerium, boron, or vanadium; in addition to incidental impurities; the rest being aluminum until the sum of the ingredients reaches 100% by weight with respect to the total weight of the alloy. Preferably, aluminum is the ingredient with the highest percentage by weight with respect to the total weight of said alloy.

In an even more particular embodiment, the alloy of the thermal conduction plate comprises aluminum and additionally one or more elements selected from iron, manganese, silicon, zinc, titanium or copper; in addition to incidental impurities; wherein aluminum is the ingredient with the highest percentage by weight with respect to the total weight of said alloy.

In an even more particular embodiment, the alloy of the thermal conduction plate comprises aluminum, iron, silicon, zinc, copper, titanium and manganese; in addition to incidental impurities; wherein aluminum is the ingredient with the highest percentage by weight with respect to the total weight of said alloy.

In an even more particular embodiment, the alloy of the thermal conduction plate consists of: aluminum, iron, silicon, zinc, copper, titanium and manganese; in addition to incidental impurities; wherein aluminum is the ingredient with the highest percentage by weight with respect to the total weight of said alloy.

An "incidental impurity" refers to a substance that is not intentionally added and that can be comprised in a raw material, such as mineral or scrap, which is used to add other elements that are indeed desired, or that can be unintentionally incorporated during the process of producing the desired alloy. Impurities can be present in an amount that does not negatively affect the performance of the present invention.

In a particular embodiment, the alloy comprises, and particularly consists of:
- iron in an amount of 0 to 0.7%, preferably 0.001 to 0.7%;
- silicon in an amount of 0 to 0.4%, preferably 0.001 to 0.4%;
- zinc in an amount of 0 to 0.3%, preferably 0.001 to 0.3%;
- copper in an amount of 0 to 0.1%, preferably 0.001 to 0.1%;
- titanium in an amount of 0 to 0.1%, preferably 0.001 to 0.1%;
- manganese in an amount of 0 to 0.4%, preferably 0.050 to 0.4%;
expressed as percentage by weight with respect to the total weight of the alloy;
- incidental impurities;
- the rest being aluminum, until the sum of the ingredients reaches 100% by weight with respect to the total weight of the alloy. Preferably, aluminum is the ingredient with the highest percentage by weight with respect to the total weight of the alloy.

In a particular embodiment, part or all of the support is formed by a material consisting of:
∘ a polymer matrix,
∘ optionally at least one flame-retardant additive, and
∘ optionally a reinforcement additive.

In a particular embodiment, the polymer matrix comprises or consists of a thermoplastic polymer; preferably a thermoplastic polymer selected from the group consisting of high-density polyethylene (HDPE), low-density polyethylene (LDPE), linear low-density polyethylene (LLDPE), polypropylene (PP), polybutylene terephthalate (PBT), polyoxymethylene (POM), polycarbonate (PC), polybutylene (PB), polystyrene (PS), polyacrylatespolyvinyl chloride (PVC), polyethylene terephthalate (PET), polytetrafluoroethylene (PTFE), polyamide (PA), acrylonitrile-butadiene-styrene (ABS), copolymers, derivatives, and combinations thereof.

In a preferred embodiment, the thermoplastic polymer is selected from polypropylene (PP), high-density polyethylene (HDPE), acrylonitrile-butadiene-styrene (ABS), copolymers, derivatives, and combinations thereof.

In a more preferred embodiment, the thermoplastic polymer is selected from acrylonitrile-butadiene-styrene (ABS), copolymers and derivatives; preferably it is acrylonitrile-butadiene-styrene (ABS).

The preparation of the thermoplastic polymers of the present invention can be carried out using prior art methods well known to one skilled in the art. In general, in these polymerization processes, the monomer or monomers are reacted in the presence of an effective amount of a free radical initiator or catalyst until substantial polymer conversion is achieved. Initiator mixtures can also be used to that end. Said polymerization can furthermore be performed in the presence of known catalysts such as, for example, Ziegler-Natta catalysts, metallocene catalysts or other single-site catalysts. Polymerization can be performed in mass, in solution, or in suspension using a discontinuous, semi-continuous, or continuous process that may vary depending on the conditions used and the desired degree of monomer conversion.

In the context of the present invention, the term "copolymer" refers to a polymer formed by two or more different types of monomers constituting the thermoplastic polymers mentioned above and attached to the same polymer chain.

In the context of the present invention, the term "derivatives" refers to thermoplastic polymers selected from those described above (polymers and copolymers), which have been chemically functionalized. The purpose of these processes is, for example, to provide polarity or functionality within the polymer by means of introducing compounds with at least one functional group as a substituent within the molecule or providing one or more polar blocks within the polymer structure. Non-limiting examples of functional groups include carboxylic acids and esters, anhydrides and salts.

In the context of the present invention, the term "combinations" when addressing polymers, refers to physical mixtures of two or more thermoplastic polymers selected from those described above, which do not comprise permanent bonds therebetween, and which are prepared using any of the mixing techniques well established in the field of the art.

In the context of the present invention, the term "reinforcement additive" refers to inorganic particles added to the polymer matrix of the material of part or all of the support to improve some of its mechanical properties or reduce the final cost, this happens particularly when the reinforcement additive is homogeneously dispersed in the polymer matrix. This is due to the large surface area of contact between the polymer matrix and the reinforcement additive. Non-limiting examples of suitable reinforcement additives are glass fiber, graphite, silica, ceramics, rock wool or metals; preferably glass fiber.

In a more particular embodiment, the reinforcement additive is in the form of fibers.

In a more particular embodiment, the reinforcement additive comprises a ceramic material; preferably it comprises a ceramic material comprising silicon (Si); more preferably it comprises silicon dioxide (SiOz); more preferably it comprises silicon dioxide fibers.

In a more particular embodiment, the reinforcement additive consists of a ceramic material; preferably it consists of a ceramic material comprising silicon (Si); more preferably it consists of silicon dioxide (SiOz); more preferably it consists of silicon dioxide fibers.

In an even more particular embodiment, the reinforcement additive consists of glass fibers.

In the context of the present invention, the term "flame retardant" refers to chemical compounds which are used to prevent or retard the development of ignition as understood in the prior art; this term also includes the term "fire retardant".

Non-limiting examples of flame-retardant additives are:
- halogenated flame retardants, preferably chlorinated flame retardants (CFRs) such as, for example, chlorinated paraffin, brominated flame retardants (BFRs) such as, for example, polybrominated diphenyl ethers (PBDEs), hexabromocyclododecane (HBCD), tetrabromobisphenol A (TBBPA), more preferably hexabromocyclododecane (HBCD), tetrabromobisphenol A (TBBPA) or mixtures thereof;
- phosphorus-based flame retardants such as, for example, red phosphorus, ammonium phosphates, metal hypophosphates, amine salts of phosphoric acids, melamine salts of phosphoric acids, metal salts of organophosphinic acids, phosphonium salts, phosphate esters, and phosphonate esters;
- flame retardants comprising silicone;
- inorganic flame retardants such as, for example, aluminum hydroxide, magnesium hydroxide, antimony trioxide, zinc borate, or
- mixtures thereof.

In a particular embodiment, the flame-retardant additive of part or all of the support is a non-halogenated, preferably non-brominated flame-retardant additive. In a more particular embodiment, the flame-retardant additive of part or all of the support is not a polybrominated diphenyl ether (PBDE).

In a particular embodiment, the flame-retardant additive of part or all of the support is a non-halogenated inorganic flame retardant; preferably it is a flame retardant selected from the group consisting of aluminum hydroxide, magnesium hydroxide, antimony trioxide (Sb₂O₃), zinc borate, or mixtures thereof.

In a particular embodiment, the flame-retardant additive of part or all of the support is an antimony oxide, even more preferably is antimony trioxide (Sb₂O₃).

In a more particular embodiment, part or all of the support is formed by a material consisting of:
∘ a polymer matrix comprising or consisting of the acrylonitrile-butadiene-styrene (ABS) polymer,
∘ at least one non-brominated flame retardant; preferably antimony trioxide (Sb₂O₃), and
∘ optionally glass fibers.

A third aspect of the invention relates to a method of manufacturing a temperature control device for battery cells, wherein the device is configured according to any of the described embodiments, wherein the method comprises:
*a) stamping an end of the thermal conduction plate configuring a sheet-like plate segment;*
*b) inserting, according to the longitudinal direction, the support into the end of the thermal conduction plate;*
*c) establishing mechanical attachment through the retention means of the support with the thin plate segment of the thermal conduction plate.*

Step a) allows obtaining a thermal conduction plate from an elongated part, for example a metallic profile preferably obtained by extrusion. After the step of stamping the end, a sheet-like plate segment, configured to establish retention with the retention means of the support that is subsequently incorporated, is obtained.

In step b), the action of inserting the support into the end of the thermal conduction plate is expressed. This insertion operation is equivalent to expressing the insertion of the end of the thermal conduction plate into the support since what is relevant is the relative approaching movement in the longitudinal direction until the end of the thermal conduction plate is housed inside the support.

Lastly, step c) establishes the mechanical linkage for retaining both parts, i.e., the thermal conduction plate and the plastic support. The two groups of most relevant examples that will be described in more detail below are by means of clipping and a deep-drawing step.

In the groups of examples which incorporate clipping, the insertion is brought to the position that allows the clipping elements to overcome a window previously arranged in the sheet-like plate segment. According to one embodiment, there is incorporated a step where the window in the sheet-like plate segment is produced by die cutting the sheet-like plate segment. According to another example, the stamping step incorporates stamping and die-cutting in the same action, with the stamping molds configuring cores that secure the die for the window. Although the window is cited in singular, there may be several retaining means using several windows.

In the examples which incorporate deep-drawing, after the insertion of the thermal conduction plate in the handling support, the sheet-like plate segment is located between the windows arranged in the support. In a subsequent step, the action of a deep-drawing core through one of the windows plastically deforms a portion of the sheet-like plate segment until it is at least partially housed in the other window causing the retention.

Various specific examples are described below using the figures.

### DESCRIPTION OF THE DRAWINGS

These and other features and advantages of the invention will become more apparent from the following detailed description of a preferred embodiment, given solely by way of illustrative and non-limiting example in reference to the attached figures.
- Figure 1: This figure shows a first embodiment of the handling support and an end of an embodiment of a thermal conduction plate attached by clipping to the handling support. Both parts are shown in a perspective view. Given that the thermal conduction plate is very long, in all the figures in which an end of the thermal conduction plate is shown, the plate is cut and the direction in which the thermal conduction plate is prolonged is shown by means of a large white arrow if said plate is not shown in section.
- Figure 2: This figure shows a perspective view of a second embodiment based on the first embodiment, in which the support furthermore incorporates elastically deformable tabs.
- Figure 3: This figure shows a perspective view of only the end of the plate used in the attachment with the support of the first and second embodiments to allow visual access to the elements that are housed inside the handling support.
- Figures 4 and 5: Figures 4 and 5 show perspective views, from both sides, of the support in accordance with the first embodiment.
- Figure 6: This figure shows a perspective view of the same first embodiment with an orientation that allows visual access to the inside of the housing of the handling support.
- Figure 7: This figure shows a top view of the handling support in accordance with the second embodiment, allowing visual access to the elastically deformable tabs.
- Figure 8: This figure shows a perspective view of the same embodiment of
- the: handling support of the preceding figure with the end of the thermal conduction plate already introduced in and retained by the retention means.
- Figure 9: This figure shows a top view of the handling support in accordance with a third embodiment, in which the elastically deformable tabs
- are: located close to the sides of the handling support.
- Figure 10: This figure shows a perspective view of the same embodiment of
- the: handling support of the preceding figure with the end of the thermal conduction plate already introduced in and retained by the retention means.
- Figure 11: This figure shows a perspective view of a fourth embodiment, in which the retention between the handling support and an end of
- an: embodiment of a thermal conduction plate is by means of deep drawing a portion of material of a sheet-like plate segment of the thermal conduction plate.
- Figure 12: This figure shows a perspective view of only the end of the plate used in the attachment with the support of the fourth embodiment
- to: allow visual access to the portions of material with the configuration that remain after a deep-drawing operation, causing
- the: plastic deformation of a pair of portions of material.
- Figures 13 and 14: Figures 4 and 5 show perspective views, from both sides, of the support in accordance with the fourth embodiment.

### DETAILED DISCLOSURE OF THE INVENTION

According to the first inventive aspect, the present invention relates to a handling support (2) suitable for handling thermal conduction plates (1), particularly adapted to be coupled to the end of a thermal conduction plate (1) to allow adjusting the temperature in battery cells.

### First embodiment

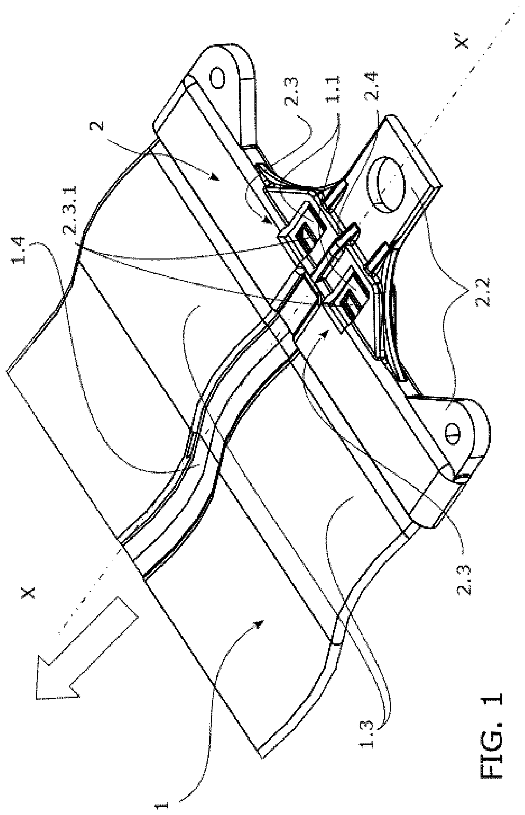

Figure 1 shows a first embodiment of both the handling support (2) and an end of a thermal conduction plate (1).

Figure 1 shows the first embodiment in a perspective view. The thermal conduction plate (1) has an elongated configuration according to a longitudinal direction X-X' and it is also flat. In this configuration, the thermal conduction plate (1) further shows an elongated path which gives rise to an approximately sinusoidal profile according to the longitudinal direction X-X'. The longitudinal direction is also the direction of insertion that allows mutual coupling between the thermal conduction plate (1) and the handling support (2).

In this embodiment, the end of the thermal conduction plate (1) is adapted so that the support (2) establishes retention of the thermal conduction plate (1), and particularly, the retention gives rise to a stable attachment linkage through retention means (2.3), that is, in this specific case, not only a retention is established according to the longitudinal direction X-X', but an attachment without clearance is also established between both parts, i.e., the handling support (2) and the thermal conduction plate (1).

The thermal conduction plate (1), according to this particular embodiment, comprises two parallel flat tubular bodies (1.3) arranged separated from one another and connected by means of an intermediate plate (1.4). The assembly maintains the flat corrugated configuration elongated in the longitudinal direction X-X'.

In this embodiment, the thermal conduction plate (1) was manufactured in aluminum and by extrusion. Furthermore, the tubular bodies (1.3) are formed by a plurality of inner channels which reduce the weight of the plate structure.

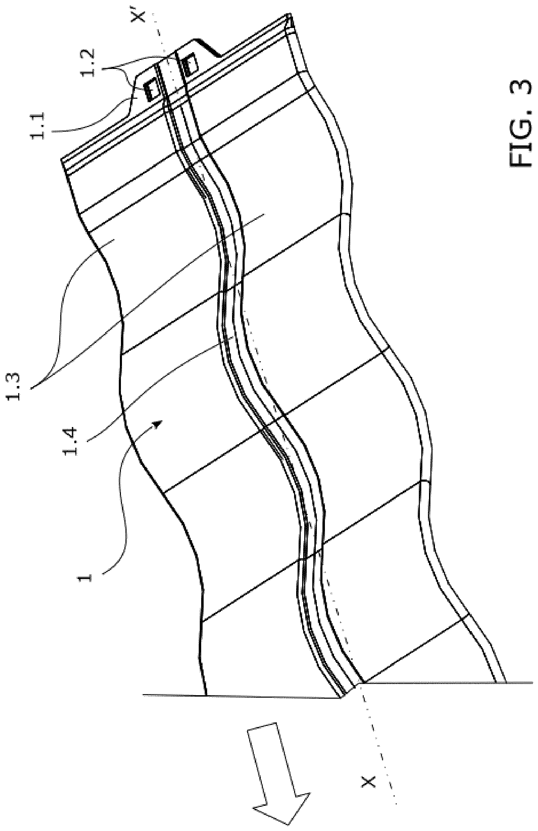

As shown in Figure 3, the end of the conduction plate (1) comprises a sheet-like plate segment (1.1). In this embodiment, the sheet-like plate segment (1.1) has been obtained by means of a stamping operation which compresses the tubular structure of the tubular bodies (1.3) and the intermediate plate (1.4) located in a central position. Die-cutting which configures the end of the thermal conduction plate (1) and particularly also of the sheet-like plate segment (1.1) also takes place in this stamping operation.

In this embodiment, the end of the sheet-like plate segment (1.1) has laterally two oblique cut-outs that help to center the position of the thermal conduction plate (1) during insertion into the housing (2.1) of the handling support (2) and, it also has two windows (1.2) that will serve to establish retention by clipping according to the longitudinal direction X-X' cooperating with retention means (2.3) of the handling support (2).

In particular, the retention means (2.3) of the handling support (2) are clipping elements (2.3.1) configured like a harpoon, wherein the harpoon shape helps in the elastic deformation thereof on the sheet-like plate (1.1) during insertion into the housing (2.1) until reaching the window (1.2), that is, they elastically deform until a position before and close to the end of insertion and when the harpoon-shaped end of the clipping element (2.3.1) reaches the position of the window (1.2) it is then introduced in said window (1.2) through the action of recovering its elastic deformation. When the harpoon-shaped end of the clipping element (2.3.1) is introduced in the window (1.2), it reaches an irreversible position given that the harpoon shape prevents it from coming out by being supported on the inner edge of the window (2.1) and prevents the thermal conduction plate (1) from coming out.

Figure 1 also shows an opening through which the sheet-like plate segment (1.1) is visually accessible when it is housed in the housing (2.1) of the handling support (2) and reaches the clipping elements (2.3.1) which are inserted into the windows (1.2).

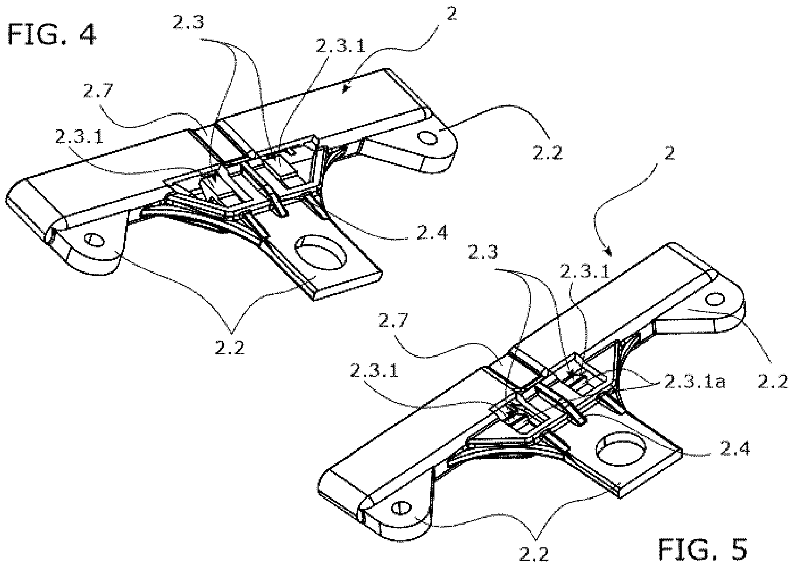

Figures 4 and 5 show detailed perspective views which allow observing both sides of the handling support (2), without the thermal conduction plate (1), such that through the openings where in Figure 1 some parts of the thermal conduction plate (1) and particularly of the sheet-like plate segment (1.1) are observed, in these figures what is observed are the inner parts of this same handling support (2).

One of the details shown are the details of the configuration of the clipping element (2.3.1) with its harpoon configuration.

In this embodiment, and optionally, the configuration of the end of the harpoon-shaped clipping element (2.3.1) has a configuration of the surface (2.3.1a) which is supported on the edge of the slightly inclined window (1.2). This support surface (2.3.1a) can be perpendicular to the direction of insertion which coincides with the longitudinal direction X-X', such that the retention force is perpendicular to the surface (2.3.1a) on which support is established in the clipping element (2.3.1). However, the alternative in which this support surface (2.3.1a) is slightly inclined allows the elastic recovery of the clipping element (2.3.1), after insertion, to exert a wedging action in a segment of the edge which delimits the window (1.2).

If the housing (2.1) which receives the end of the thermal conduction plate (1) and the position of the window (1.2) have a configuration such that complete elastic recovery of the clipping element (2.3.1) after complete insertion of the thermal conduction plate (1) is not allowed, then it is ensured that the clipping action maintains a retention force without clearances.

The surface is said to be slightly inclined at all times because the inclination must be such that the traction force causes a friction force sufficient for the projection of the force of support on the inclined surface in the direction transverse to the longitudinal direction not to cause the deformation of the clipping element (2.3.1), coming out of the window (1.2).

In all the embodiments, the retention means (2.3) are double retention tooling symmetrically configured with respect to a central axis extending according to the longitudinal direction X-X'. Particularly, there are two clipping elements (2.3.1) in this example.

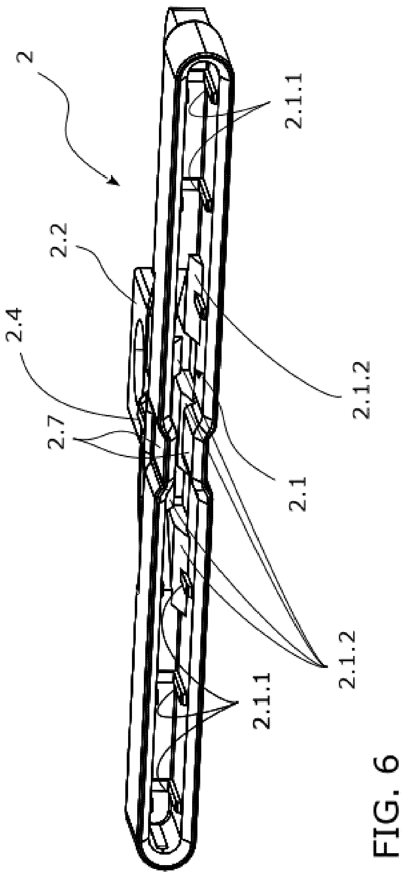

Figure 6 shows a perspective view of the handling support (2) with a point of view that allows observing certain constructive details located inside the housing (2.1) intended for receiving the end of the thermal conduction plate (1).

A distribution of fitting ribs (2.1.1), which are ribs that project from the inner surface and ensure that support with the outer surface of the thermal conduction plate (1) only occurs in such ribs, is shown on the inner surface of the wall of the handling support (2). This ensures a support that is either localized or along a line, which allows the final relative position between the thermal conduction plate (1) and the handling support (2) to be better ensured. These fitting ribs (2.1.1) are mainly on the surfaces which correspond to the larger sides of the housing and also at the side ends.

These fitting ribs (2.1.1) exert a force perpendicular to the surface of the thermal conduction plate (1), so the fitting ribs (2.1.1) located on the larger sides tend to open the housing, particularly in the central part. According to the embodiments shown in the figures, this deformation tendency is compensated for with an outer stiffening rib (2.4) that offers reinforcement tending to prevent this opening deformation of the housing (2.1).

This Figure 6 also shows a notch (2.7), which causes the narrowing of the opening that defined the housing (2.1) so that the housing is adapted to the specific configuration used in the embodiments of the thermal conduction plate (1), using two tubular bodies (1.3) spaced apart by an intermediate plate (1.4). The notch (2.7) coincides with the central position of the intermediate plate (1.4) once the thermal conduction plate (1) and the handling support (2) are inserted together.

This Figure 6 also shows, in the central position of the housing (2.1), several wedges (2.1.2) existing in positions which are located on both sides of the sheet-like plate segment (1.1) when inserted in an operating position. These wedges (2.1.2) serve as a guide during the insertion step to ensure that the sheet-like plate segment (1.1) does collide with inner steps due to the complementary configuration of the housing to a stepped part and go directly into their position where the retention means (2.3) are located.

The handling support (2), as in all the embodiments which have been described and will also be described below, once mechanically linked to the thermal conduction plate (1), maintains an attachment such that both parts (1, 2) behave mechanically as a single part. Given that the handling support (2) has handling means, the assembly formed by the thermal conduction plate (1) and handling support (2) can be handled through said handling means (2.2).

In this embodiment, the handling means (2.2) are plates with perforations that allow the entry of mechanical actuators located at the end of an automated handler and are introduced in the perforations, ensuring the attachment with said handler. By means of this temporary attachment, the handler can move and position the thermal conduction plate (1) both in the final position of the battery and in any previous movement operation required in battery construction.

### Second embodiment

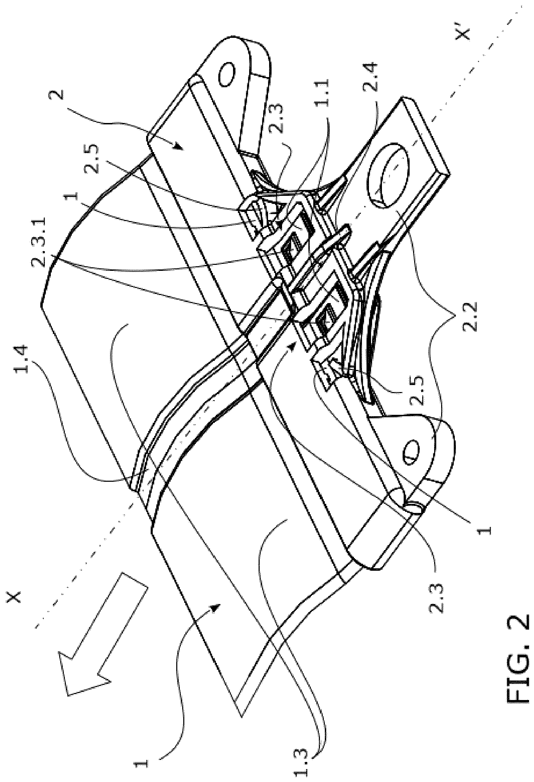

Figure 2 shows a second embodiment. This second embodiment contains all the elements of the first embodiment, so the description made in the preceding embodiment applies to this second embodiment.

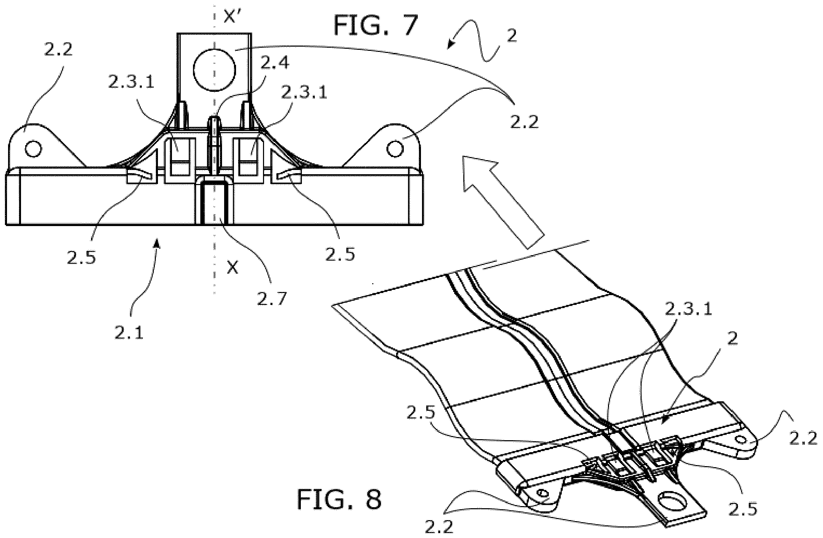

Figure 2 is completed with Figures 7 and 8 showing the handling support (2) without the thermal conduction plate (1) in order to allow improved visual access to certain elements which would otherwise be partially concealed. Figure 7 is a top view of the handling support (2) and Figure 8 is a perspective view similar to the view of Figure 2 only from the opposite side.

Additionally, on each side of the openings in the handling support (2) where the clipping elements (2.3.1) are located they are two other openings, also arranged symmetrically, where there is a tab (2.5) in each opening.

The openings where the tabs (2.5) are located allow having partial visual access to the transition area between the end of the thermal conduction plate where the tubular body (1.3) ends and the sheet-like plate segment (1.1). That is, the transition between the two thicknesses, the thickest of the side of the tubular body (1.3) and the thinnest of the sheet-like plate segment (1.1). Each of the tabs (2.5) has a groove which allows partially housing the edge of the sheet-like plate segment (1.1), stabilizing the position between the tab and the sheet-like plate segment (1.1).

Additionally, during insertion of the thermal conduction plate (1), the sheet-like plate segment (1.1) is introduced in the groove of the tab (2.5) and furthermore the ends of the tab (2.5) on both sides of the groove are supported in the thickness transition of the thermal conduction plate (1), transition which has been described between the tubular body (1.3) and the sheet-like plate segment (1.1). Figure 7 shows the slightly curved ends of the tab (2.5) which tend to move closer to the inside of the housing (2.1) such that, when the thermal conduction plate (1) is inserted, they deform elastically, maintaining a permanent force that tends to remove the thermal conduction plate (1) from the housing (2.1).

This tendency to come out of the housing (2.1) means that any clearance in the clipping disappears, given that the inner edge of the window (1.2) of the sheet-like plate segment (1.1) is always forced to be supported on the support surface (2.3.1a) of the harpoon-shaped end of the clipping element (2.3.1).

The support surface (2.3.1a) of the harpoon-shaped end of the clipping element (2.3.1) has been described above as a precisely inclined or oblique surface also for minimizing or reducing clearance in the longitudinal direction. Both solutions, the inclination of the support surface (2.3.1a) of the harpoon-shaped end of the clipping element (2.3.1) and the use of the tabs (2.5) are alternatives which, according to different embodiments, can each be incorporated separately or both solutions can be incorporated simultaneously like the example shown in the figures.

### Third embodiment

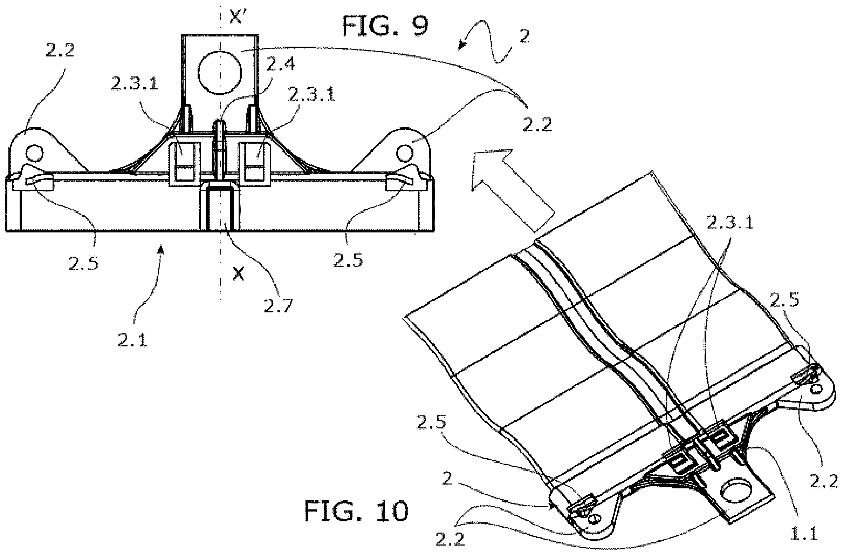

A third embodiment is shown in Figures 9 and 10 having an orientation the same as that used in Figures 7 and 8 showing the second embodiment, and these two new figures also show the same elements as those described in the second embodiment, so the detailed description of the second embodiment is valid for this third embodiment.

The difference shown by this third embodiment is the position of the tabs (2.5) that exert a force which tends to remove the thermal conduction plate (1) from the housing (2.1); in this third embodiment, their position is proximal to the side ends.

This position proximal to the ends of the sides, of both the handling support (2) and the thermal conduction plate (1), has the effect of separating the two force application points, which allows the relative position to be stabilized with respect to any stress that tends to cause the rotation of the handling support (2) with respect to the thermal conduction plate (1) with an axis of rotation perpendicular to the main plane in which both the handling support (2) and the flat end of the thermal conduction plate (1) are located.

### Fourth embodiment

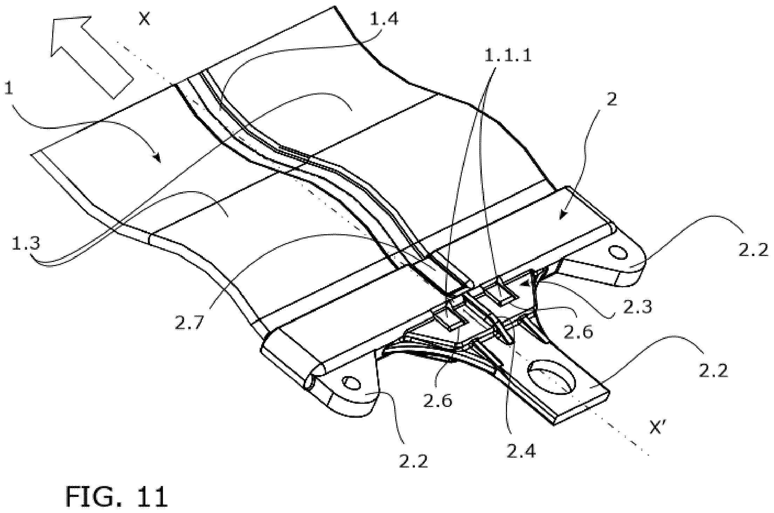

Figure 11 shows a fourth embodiment of both the thermal conduction plate (1) and the handling support (2), both attached by retention means alternative to clipping.

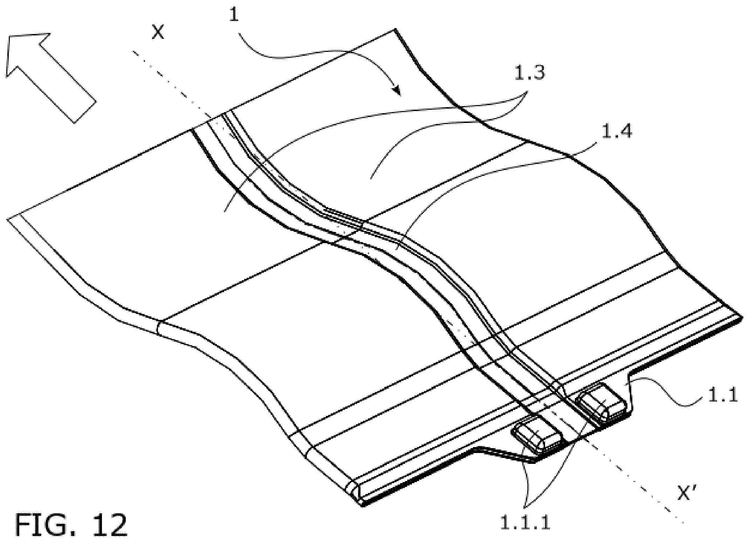

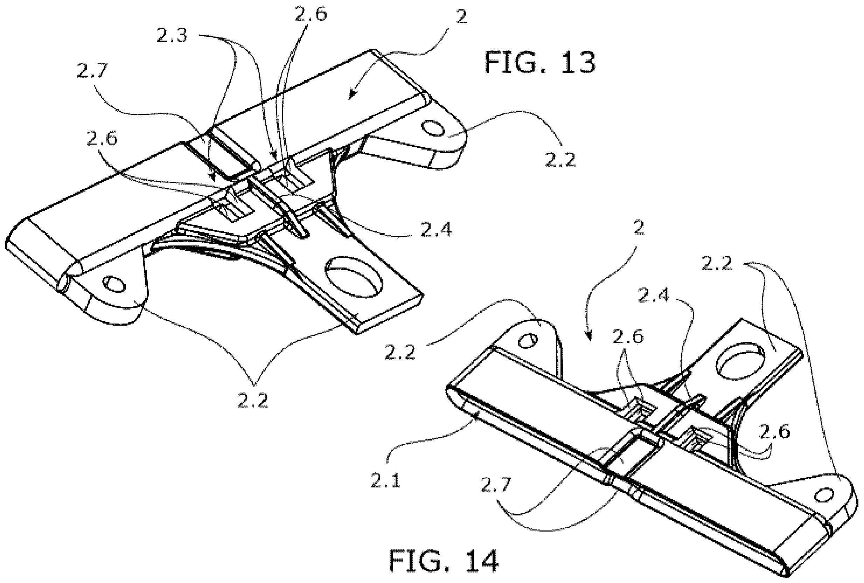

Figure 12 only shows the thermal conduction plate (1) after removing the handling support (2) to observe certain details of the retention tooling (2.3) and Figures 13 and 14 show perspective views of only the handling support (2) on the two main faces where the openings it has are not closed by the material of the thermal conduction plate (1) and there is therefore visual access to certain details therein.

In this embodiment, the end of the thermal conduction plate (1) also has a sheet-like plate segment (1.1), with the exception that this sheet-like plate segment (1.1), for this attachment solution, does not require the presence of windows (1.2) intended for cooperating with clipping elements (2.3.1). However, although these retention means (2.3) are described as an alternative, it is possible to combine both retention means (2.3), the means described in this example and the described clipping means. In that case, it will be necessary to incorporate the means associated with both retention means.

Continuing with the description of this example, the handling support (2) is the one which now has windows (2.6), particularly two pairs of windows (2.6). One pair of windows on each side due to the symmetrical configuration of the handling support (2) and each of the pairs of windows (2.6) coincides in the top view.

The housing (2.1), both in the clipping solution and in this solution, has a wide inlet area and a narrow inside for housing the sheet-like plate segment (1.1). In this case, when the sheet-like plate segment (1.1) is in its final position after the insertion of the end of the thermal conduction plate (1) into the housing (2.1), the sheet-like plate segment (1.1) passes between the two facing windows (2.1) of the pair of windows (2.1). That is, the sheet-like plate segment (1.1) at least partially covers the two windows (2.1). According to the preferred example, the segment completely covers the two windows (2.1) and the insertion thereof goes beyond the windows such that the windows (2.1) coincide with an inner portion of the sheet-like plate segment (1.1).

In this position, the sheet-like plate segment (1.1) is accessible through both sides of the handling support (2) through both windows (2.6). Once the insertion ended, in a plastic deformation operation, a punch is introduced through one of the two facing windows (2.6), reaching the sheet-like plate segment (1.1), moving forward until causing plastic deformation in a region which gives rise to a deep-drawn portion of material (1.1.1) of the sheet-like plate segment (1.1) until said deep-drawn portion of material (1.1.1) is at least partially introduced in the opposite window (2.6). Upon removing the punch, the deep-drawn portion of material (1.1.1) which corresponds to the sheet-like plate segment (1.1) that has undergone plastic deformation is at least partially housed in one of the windows (2.6), preventing the segment in the sheet-like plate (1.1) from coming out of the housing (2.1), and therefore establishing retention between the thermal conduction plate (1) and the handling support (2).

Figures 13 and 14 show the two pairs of facing windows (2.6) and Figure 11 shows how a deep-drawn portion of material (1.1.1) of the segment of sheet-like plate (1.1) emerge after the plastic deformation operation with a punch.

Figure 12 shows the same configuration with the exception that the handling support (2) is visually removed to allow observing the final configuration of the sheet-like plate segment (1.1) with the deep-drawn portions of material (1.1.1) having a complementary shape of the rectangular windows (2.6), the shape selected for this embodiment, where they are housed.

The deep-drawn portions of material (1.1.1) exert support at least on the edges of the windows (2.6) housing same, ensuring retention.

It has been observed that this embodiment shows fewer clearances and establishes a safe form of attachment between the thermal conduction plate (1) and the handling support (2).

## Claims

1. Handling support (2) for thermal conduction plates (1) of battery cells, comprising:
- a housing (2.1) configured to receive an end of a thermal conduction plate (1), the thermal conduction plate (1) extending according to a longitudinal direction (X-X'), the end of the thermal conduction plate (1) having a sheet-like plate segment (1.1);
- handling means (2.2) configured to be handled preferably by automated means;
wherein the housing (2.1) comprises retention means (2.3) adapted to establish at least a retention according to the longitudinal direction (X-X') on the sheet-like plate segment (1.1).

2. Support (2) according to the preceding claim, wherein the housing (2.1) comprises at least one elastically deformable tab (2.5) configured to be deformed through the insertion of the end of the thermal conduction plate (1) and to exert a force according to the longitudinal direction (X-X') on said end of the thermal conduction plate (1).

3. Support (2) according to any of the preceding claims, wherein the housing (2.1) comprises one or more fitting ribs (2.1.1) to exert a localized support stress on at least one point of the lateral surface in a region of the end of the thermal conduction plate (1).

4. Support (2) according to any of the preceding claims, wherein the housing (2.1) comprises at least one positioning wedge (2.1.2) in the insertion of the end of the sheet-like plate segment (1.1).

5. Support (2) according to any of the preceding claims, wherein the central area of the housing (2.1) comprises at least one outer reinforcement rib (2.4) to reduce the opening of the housing (2.1) after the insertion of the end having a sheet-like plate segment (1.1).

6. Support (2) according to any of the preceding claims, wherein the support is further configured for handling thermal conduction plates (1) having a sheet-like plate segment (1.1) which have at least one window (1.2), and wherein the retention means (2.3) are a clipping element (2.3.1) adapted to establish clipping in the window (1.2) of the sheet-like plate segment (1.1).

7. Support (2) according to the preceding claim, wherein the clipping element (2.3.1) has a retention surface according to the longitudinal direction (X-X') configured to establish support on the inner edge of the window (1.2) and wherein this retention surface is oblique to prevent clearances.

8. Support (2) according to any of claims 1 to 5, wherein the fixing means are two windows (2.6) in the housing (2.1), the two windows (2.6) coinciding with one another and being positioned such that, in the operating mode after the insertion of the thermal conduction plate (1), the sheet-like plate segment (1.1) of the end of the thermal conduction plate (1) is located between the two windows (2.6) to establish fixing by means of the deep-drawing of the sheet-like plate segment (1.1) such that the deep-drawn portion of material (1.1.1) is accessible through the windows (2.6) of the handling support (2) and the deep-drawn portion of material (1.1.1) is at least partially housed in the other window (2.6).

9. Temperature control device comprising a thermal conduction plate (1) and at least one support (2), wherein
- the thermal conduction plate (1) extends according to a longitudinal direction (X-X') and comprises a sheet-like plate segment (1.1) at one end;
- the support (2) is according to any of the preceding claims;
wherein the housing (2.1) of the support houses at least the sheet-like plate segment (1.1) and wherein an attachment is established between the sheet-like plate segment (1.1) and the retention means (2.3) of the housing (2.1) of the support (2).

10. Device according to the preceding claim, wherein the thermal conduction plate (1) comprises a flat tube, preferably with inner channels that extend longitudinally (X-X'), stamped at the end thereof to give rise to the sheet-like plate segment (1.1).

11. Device according to the preceding claim, wherein the flat tube is formed by two tubular bodies (1.3) extending longitudinally (X-X') and arranged adjacent and mechanically attached to one another by an intermediate plate (1.4), and wherein the retention means (2.3) are double retention means symmetrically configured with respect to the longitudinal direction (X-X').

12. Device according to the preceding claim, wherein the housing (2.1) comprises a notch (2.7) configured to be fitted to the intermediate plate (1.4) of the thermal conduction plate (1).

13. Device according to any of claims 9 to 12, wherein
- at least part of the thermal conduction plate (1) comprises an alloy comprising aluminum and optionally additional elements; and/or,
- part or all of the support (2) is formed by a material comprising:
∘ a polymer matrix,
∘ optionally at least one flame-retardant additive, preferably antimony trioxide (Sb₂O₃), and
∘ optionally a reinforcement additive; preferably glass fiber.

14. Method of manufacturing a temperature control device for battery cells configured according to any of claims 9 to 13 to allow the handling thereof, wherein the method comprises:
- stamping an end of the thermal conduction plate (1) configuring a sheet-like plate segment (1.1);
- inserting, according to the longitudinal direction (X-X'), the support (2) into the end of the thermal conduction plate (1);
- establishing mechanical attachment through the retention means (2.3) of the support (2) with the sheet-like plate segment (1.1) of the thermal conduction plate (1).
